(19) Europäisches Patentamt

European Patent Office

Office européen des brevets

(11) **EP 2 998 762 B1**

(12) **EUROPEAN PATENT SPECIFICATION**

(45) Date of publication and mention
of the grant of the patent:
**12.06.2019 Bulletin 2019/24**

(21) Application number: **14185172.5**

(22) Date of filing: **17.09.2014**

(51) Int Cl.:
*G01S 13/72* $^{(2006.01)}$        *G01S 13/86* $^{(2006.01)}$
*G01S 13/93* $^{(2006.01)}$

(54) **Object recognition apparatus**

Vorrichtung zum Erkennen von Objekten

Dispositif de reconnaissance d'objets

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2016 Bulletin 2016/12**

(73) Proprietor: **Honda Motor Co., Ltd.
Tokyo 107-8556 (JP)**

(72) Inventor: **Nishigaki, Morimichi
63073 Offenbach am Main (DE)**

(74) Representative: **Weickmann & Weickmann
PartmbB
Postfach 860 820
81635 München (DE)**

(56) References cited:
**WO-A1-2014/136754      CA-A1- 2 682 438
JP-A- 2002 122 669**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention:

The present invention relates to an object recognition apparatus for recognizing an object existing in a detectable area whose size is finite.

Description of the Related Art:

Heretofore, there have been developed technologies for detecting the peripheral state of an own vehicle (one form of a mobile body) with an external sensor and recognizing an object on the basis of a sensor signal obtained from the external sensor. For example, various processes have been proposed to correctly calculate the positional information of an object that exists across and over the boundary of a detectable area that extends radially from the position of an own vehicle.

JP 2002-122669 A ([0008], etc.) proposes a method of judging whether a portion of an object which is being measured exists outside a detection angle, i.e., outside a detectable area, or not and interpolating the position of the portion of the object outside the detection angle if it is judged that the portion of the object exists outside the detection angle.

WO 2014/136754 A1 and CA 2 682 438 A1 show a Kalman filter in a radar system.

SUMMARY OF THE INVENTION

According to the method disclosed in JP 2002-122669 A, however, it is necessary to carry out the judging process and the interpolating process each time positional information is calculated. Further, in order to carry out the judging process, it is necessary to calculate a feature quantity with regard to the planar shape of the object. As a result, depending on the position in which the object exists, the amount of processing operation for calculating the positional information and the processing burden may be greatly increased disadvantageously.

The present invention has been made in an effort to solve the above problem. It is an object of the present invention to provide an object recognition apparatus which is capable of estimating the position or motion of an object at any position within a detectable area whose size is finite without substantially increasing the amount of processing operation and the processing burden.

According to the present invention, there is provided an object recognition apparatus according to claim 1.

The object recognition apparatus comprises detecting means mounted on a mobile body and for acquiring a detection signal representing an object that exists within a detectable area, and feature quantity estimating means for estimating a plurality of feature quantities with respect to a relative position or motion of the object with respect to the mobile body, using the detection signal acquired by the detecting means and a set of estimation coefficients, wherein the feature quantity estimating means estimates the plurality of feature quantities using the different set of estimation coefficients depending on the position of the object in at least one of a widthwise direction of the mobile body and an angular direction about the mobile body within the detectable area.

Since the feature quantity estimating means is provided which estimates the plurality of feature quantities using a different set of the estimation coefficients depending on the position of the object in at least one of the widthwise direction and the angular direction within the detectable area, it is possible to carry out an estimating process suitable for the position in the widthwise direction or the angular direction simply by changing the set of estimation coefficients. Therefore, it is possible to estimate the position or motion of the object at any position within the detectable area whose size is finite, without substantially increasing the amount of processing operation and the processing burden.

The feature quantity estimating means sequentially estimates the plurality of feature quantities with a Kalman filter according to a state space model that describes a time series of a state vector whose vector components are represented by the plurality of feature quantities. It is possible to substantially reduce the amount of processing operation and the processing burden while maintaining the estimation accuracy, by using the Kalman filter.

The plurality of feature quantities include a widthwise feature quantity representing a behavior of the object along the widthwise direction, and the feature quantity estimating means estimates the plurality of feature quantities using the set of estimation coefficients whose inheritance possibility to inherit an estimated result of the widthwise feature quantity is higher at an end in the widthwise direction or the angular direction than at a center in the widthwise direction or the angular direction. Since a past estimated result is reflected more strongly at the end in the widthwise direction or the angular direction, an erroneous estimated result of the widthwise feature quantity is prevented from being obtained even when part of the object exists outside the detectable area.

Preferably, the set of estimation coefficients includes a noise covariance of an observation equation which specifies the state space model, and the feature quantity estimating means estimates the plurality of feature quantities using the set of estimation coefficients including the noise covariance with respect to the widthwise feature quantity, the noise covariance being of a greater value at the end in the widthwise direction or the angular direction than at the center in the widthwise direction or the angular direction. It is possible to minimize the number of variable parameters by using the tendency that the past estimated result is reflected more strongly if the value of the noise covariance of the observation equation is increased.

Preferably, the set of estimation coefficients includes a noise covariance of a state equation which specifies the state space model, and the feature quantity estimating means estimates the plurality of feature quantities using the set of estimation coefficients including the noise covariance with respect to the widthwise feature quantity, the noise covariance being of a smaller value at the end in the widthwise direction or the angular direction than at the center in the widthwise direction or the angular direction. It is possible to minimize the number of variable parameters by using the tendency that the past estimated result is reflected more strongly if the value of the noise covariance of the state equation is reduced.

Preferably, the feature quantity estimating means estimates the plurality of feature quantities using the set of estimation coefficients whose inheritance possibility to inherit the estimated result is higher with respect to the object that exists at the end in the widthwise direction or the angular direction and that is approaching the mobile body. In view of the fact that the object that is approaching the mobile body has a higher attention level for the mobile body, an erroneous estimated result of the widthwise feature quantity of the object having such a higher attention level is prevented from being obtained.

Preferably, the feature quantity estimating means estimates the plurality of feature quantities using the set of estimation coefficients whose inheritance possibility to inherit the estimated result is higher with respect to the object that exists at the end in the widthwise direction or the angular direction and that is greater than a predetermined size. In view of the fact that the object that has a greater size exists across and over the boundary of the detectable area for a longer time, an erroneous estimated result of the widthwise feature quantity of the object which is greater than a predetermined size is prevented from being obtained.

Preferably, the detecting means acquires the detection signal representing the object that exists within the detectable area which extends radially from a position of the mobile body, and the feature quantity estimating means estimates the plurality of feature quantities using the different set of estimation coefficients depending on the position of the object in the angular direction within the detectable area.

According to the present invention, inasmuch as the object recognition apparatus includes the feature quantity estimating means which estimates the plurality of feature quantities using a different set of the estimation coefficients depending on the position of the object in at least one of the widthwise direction and the angular direction within the detectable area, it is possible to carry out an estimating process suitable for the position in the widthwise direction or the angular direction simply by changing the set of estimation coefficients. Therefore, it is possible to estimate the position or motion of the object at any position within the detectable area whose size is finite, without substantially increasing the amount of processing operation and the processing burden.

The above and other objects, features, and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1 is a block diagram showing the configuration of a motion assisting apparatus as an object recognition apparatus according to an embodiment of the present invention;
FIG. 2 is a perspective view of an own vehicle incorporating the motion assisting apparatus shown in FIG. 1;
FIG. 3 is a flowchart of an operation sequence of the motion assisting apparatus shown in FIG. 1;
FIG. 4 is a first plan view showing the positional relationship between the own vehicle and other objects;
FIG. 5 is a second plan view showing the positional relationship between the own vehicle and the other objects;
FIG. 6 is a schematic view showing a result obtained when the feature points of other vehicles have been sequentially estimated (comparative example);
FIG. 7 is a detailed flowchart of a process of estimating the position or motion of another object (step S4 in FIG. 3);
FIG. 8 is a first schematic view showing the division of subareas in a detectable area;
FIG. 9 is a schematic view showing a result obtained when the feature points of other vehicles have been sequentially estimated (present embodiment);
FIG. 10 is a second schematic view showing the division of subareas in a detectable area; and
FIG. 11 is a third schematic view showing the division of subareas in a detectable area.

DESCRIPTION OF THE PREFERRED EMBODIMENTS

An object recognition apparatus according to a preferred embodiment of the present invention will be described in detail below with reference to the accompanying drawings.

[Configuration of Motion Assisting Apparatus 10]

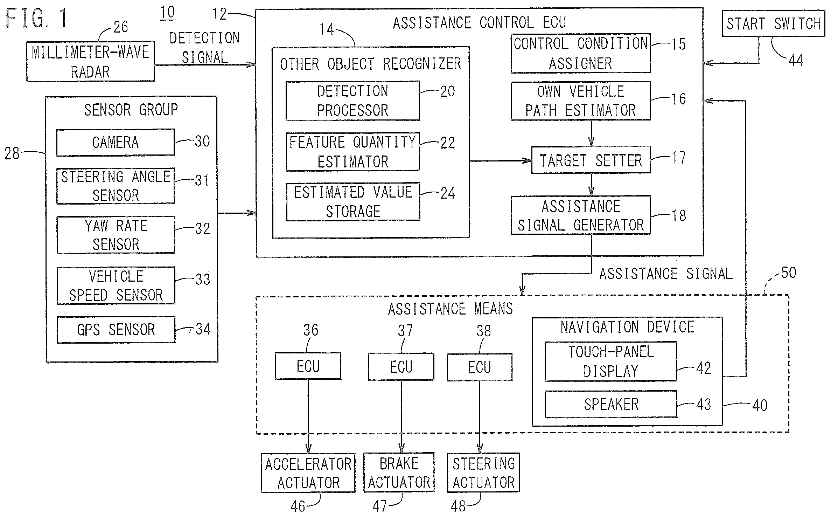

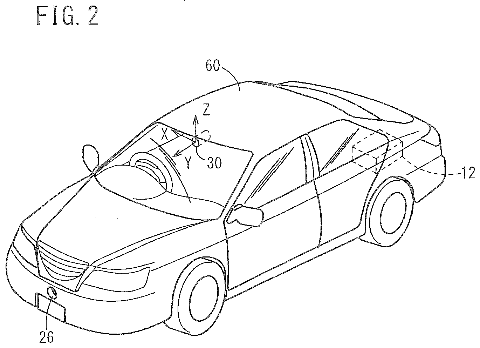

FIG. 1 shows in block form the configuration of a motion assisting apparatus 10 as an object recognition apparatus according to an embodiment of the present invention. FIG. 2 shows in perspective an own vehicle 60 incorporating the motion assisting apparatus 10 shown in FIG. 1.

The motion assisting apparatus 10 is provided with an electronic control unit (hereinafter referred to as "assistance control ECU 12") for carrying out various control processes for assisting in moving the own vehicle 60 (FIG. 2) which is one form of a mobile body. It should be noted that the term "assistance" used in the present description denotes not only a mode of operation for automatically driving the own vehicle 60, but also a mode of operation for prompting the driver of the own vehicle 60 to take an action to move the own vehicle 60.

The assistance control ECU 12 reads programs from a memory, not shown, and executes the programs to thereby perform functions including an other object recognizer 14, a control condition assigner 15, an own vehicle path estimator 16, a target setter 17, and an assistance signal generator 18. The other object recognizer 14 includes a detection processor 20, a feature quantity estimator 22 (feature quantity estimating means), and an estimated value storage 24. Specific details of the above functions will be described later.

The motion assisting apparatus 10 is further provided with a millimeter-wave radar 26 (detecting means) for transmitting an electromagnetic wave in a millimeter-wave range outwardly from the own vehicle 60 and detecting the position of another object on the basis of the reception characteristics of the reflected wave, and a sensor group 28 composed of a plurality of sensors. The sensors of the sensor group 28 and the millimeter-wave radar 26 are electrically connected to the assistance control ECU 12.

The sensors of the sensor group 28 include a camera 30 for acquiring an image including other objects that exist in the periphery of the own vehicle 60, a steering angle sensor 31 for detecting a rotation angle (steering angle) of a steering wheel, not shown, a yaw rate sensor 32 for detecting a yaw rate of the own vehicle 60, a vehicle speed sensor 33 for detecting a speed of the own vehicle 60, and a global positioning system (GPS) sensor 34 for detecting a current position of the own vehicle 60. The sensor group 28 is not limited to the illustrated example, but may include a plurality of sensors of one type, and may include detecting means other than those described above.

As shown in FIG. 2, the millimeter-wave radar 26 is disposed as a single unit on a front portion of the own vehicle 60, e.g., in the vicinity of a front grille thereof. The camera 30 is disposed as a single unit on an upper portion of a front windshield of the own vehicle 60. On the camera 30, there is established a real-space coordinate system where the mounted position of the camera 30 is defined as the origin, a widthwise direction (horizontal direction) of the own vehicle 60 as the X-axis, an axle direction (traveling direction) of the own vehicle 60 as the Y-axis, and a heightwise direction (vertical direction) of the own vehicle 60 as the Z-axis.

Referring back to FIG. 1, the motion assisting apparatus 10 also includes three ECUs 36, 37, 38, a navigation device 40 including a touch-panel display 42 and a speaker 43, and a start switch 44. The start switch 44 serves to start up or deactivate the assistance control ECU 12.

The ECU 36, which controls an electric acceleration system, is connected to an accelerator actuator 46 for operating an accelerator pedal, not shown. The ECU 37, which controls an electric brake system, is connected to a brake actuator 47 for operating a brake pedal, not shown. The ECU 38, which controls an electric power steering system, is connected to a steering actuator 48 for operating a steering wheel, not shown.

The touch-panel display 42 outputs visible information on a display screen, and inputs various items of information by detecting touched positions on the display screen. The speaker 43 outputs audio information including audio guidance and alarm sounds.

The assistance control ECU 12 generates and outputs control signals (hereinafter also referred to as "assistance signals") for enabling the own vehicle 60 to deal with other objects, and supplies the assistance signals to an assistance means 50 for assisting in moving the own vehicle 60. In the illustrated embodiment, the ECUs 36, 37, 38 and the navigation device 40 jointly function as the assistance means 50.

[Operation Sequence of Motion Assisting Apparatus 10]

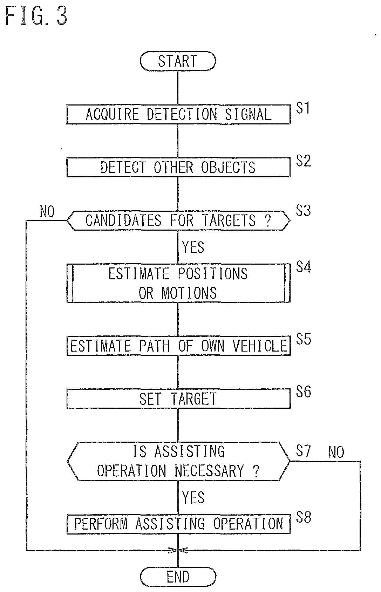

An operation sequence of the motion assisting apparatus 10 shown in FIG. 1 will be described below with reference to a flowchart shown in FIG. 3.

Prior to the operation sequence, an occupant, particularly the driver, of the own vehicle 60 makes settings with respect to assisting operation of the motion assisting apparatus 10. Specifically, the occupant turns on the start switch 44 and inputs control information through the touch-panel display 42 of the navigation device 40. Then, the control condition assigner 15 assigns control conditions including the type of the assisting operation and control variables, and makes operation of the assistance control ECU 12 "effective".

In step S1, the millimeter-wave radar 26 detects an external state in the periphery (mainly forward area) of the own vehicle 60, thereby acquiring a detection signal. Thereafter, the assistance control ECU 12 is successively supplied with detection signals from the millimeter-wave radar 26.

In step S2, the detection processor 20 detects whether one or more objects (other objects) different from the own vehicle 60 exist or not and, if they exist, the types of the other objects, at regular or irregular execution timings. Examples of the types of the other objects include a human being, various animals (specifically, mammals such as deer, horses, sheep, dogs, cats, etc., birds, etc.) and artificial structures (specifically, mobile bodies including vehicles, signs, power poles, guardrails, walls, etc.) .

In step S3, the detection processor 20 judges whether there are candidates for targets among the one or more other objects detected in step S2 or not. The term "target" means another object that serves as a target in the assisting operation of the motion assisting apparatus 10. If it is judged that no target exists (step S3: NO), then the motion assisting apparatus 10 ends the assisting operation at the present execution timing. If it is judged that there are candidates for targets (step S3: YES), then control goes to next step S4.

In step S4, the feature quantity estimator 22 estimates relative positions or motions of the other objects judged as the candidates in step S3 with respect to the own vehicle 60. Details of the estimating process will be described later.

In step S5, the own vehicle path estimator 16 estimates a path along which the own vehicle 60 will travel, according to a known estimating process. Information that is used in the estimating process includes, for example, the detection signal, various sensor signals representing the steering angle, the yaw rate, the speed, and the present position of the own vehicle 60, map information acquired from the navigation device 40, etc.

In step S6, the target setter 17 sets, as a target, one of the other objects judged as the candidates in step S3. For example, the target setter 17 sets one of the other objects that exist on the path of the own vehicle 60 within a prescribed range from the position of the own vehicle 60, as a target. The target setter 17 supplies the assistance signal generator 18 with information indicating that a target exists and detection results (specifically, the position, speed, width, and attribute of the target).

In step S7, the assistance control ECU 12 judges whether it is necessary to assist the own vehicle 60 or not. If it is judged that it is not necessary to assist the own vehicle 60 (step S7: NO), then the motion assisting apparatus 10 ends the assisting operation at the present execution timing. If it is judged that it is necessary to assist the own vehicle 60 (step S7: YES), then control goes to next step S8.

In step S8, the assistance control ECU 12 controls assisting operation of the assistance means 50 to cause the own vehicle 60 to deal with the target. Prior to the control process of the assistance control ECU 12, the assistance signal generator 18 generates an assistance signal (e.g., a control quantity) to be used to control the assistance means 50, and then outputs the assistance signal to the assistance means 50.

The ECU 36 supplies a drive signal representing an accelerator control quantity to the accelerator actuator 46, thereby turning the accelerator pedal, not shown. The ECU 37 supplies a drive signal representing a brake control quantity to the brake actuator 47, thereby turning the brake pedal, not shown. The ECU 38 supplies a drive signal representing a steering wheel control quantity to the steering actuator 48, thereby turning the steering wheel, not shown.

In this manner, the motion assisting apparatus 10 accelerates, decelerates, brakes, or steers the own vehicle 60 appropriately to thereby perform a "follow-up control" process for following a vehicle as the target or an "intervehicular distance control" process for keeping an intervehicular distance up to the vehicle as the target. The types of motion assisting control processes performed by the motion assisting apparatus 10 are not limited to such adaptive cruise control (ACC) processes, but may include a "contact avoidance control" process for avoiding contact with other objects, and a "collision mitigation brake system (CMBS) control" process for mitigating shocks produced upon collision with other objects.

In addition to or aside from the above control processes, the motion assisting apparatus 10 may output visible information (or audio information) indicating that the target exists, to the touch-panel display 42 (or the speaker 43) to thereby prompt the occupant of the own vehicle 60 to operate the own vehicle 60.

The motion assisting apparatus 10 thus finishes the assisting operation at one execution timing. The motion assisting apparatus 10 sequentially carries out the operation sequence shown in FIG. 3 at identical or different time intervals to successively detect other objects that exist in the periphery of the own vehicle 60 while it is traveling, set targets, and control the own vehicle 60 to deal with the other objects when necessary.

[Example of Setting of Target 70]

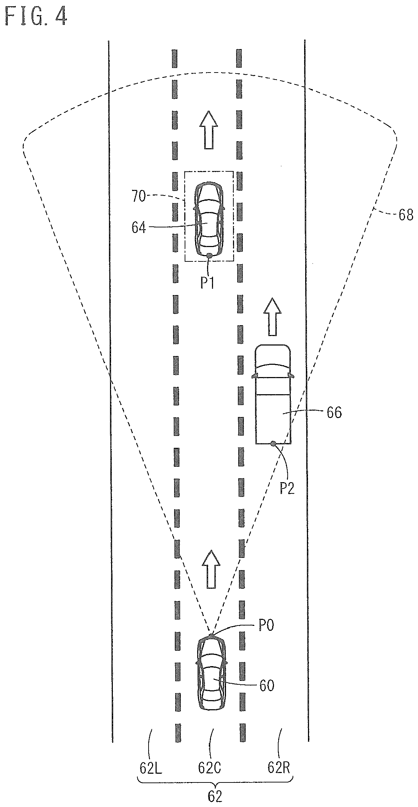

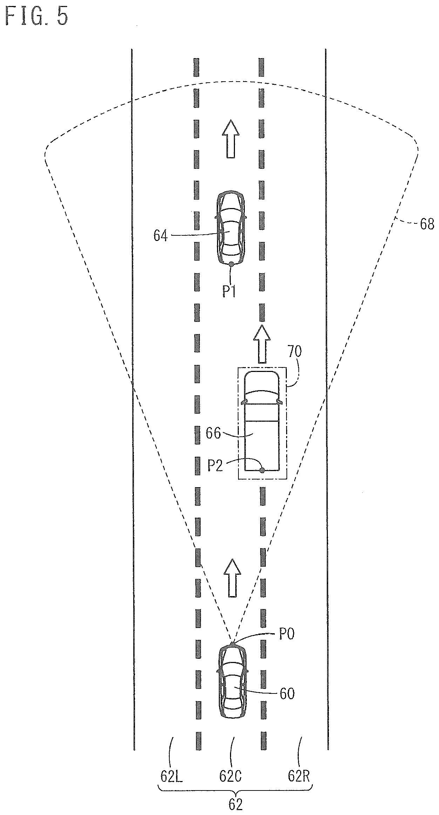

The process of setting a target 70 (step S6 in FIG. 3) will be described in detail below with reference to FIGS. 4 and 5. FIG. 4 is a first plan view showing the positional relationship between the own vehicle 60 and other objects.

FIG. 5 is a second plan view showing the positional relationship between the own vehicle 60 and the other objects.

As shown in FIG. 4, the own vehicle 60 is traveling on a road 62 (lane 62C) which is straight. The road 62 has three lanes 62R, 62C, 62L arranged successively from the right. Another vehicle 64 traveling on the same lane 62C exists forwardly of the own vehicle 60. Still another vehicle 66 traveling on the adjacent lane 62R exists rightwardly and rearwardly of the other vehicle 64. The midpoint on a front side of the own vehicle 60 is defined as a position P0, whereas the midpoints on rear sides of the other vehicles 64, 66 are defined as positions P1, P2, respectively.

A sectorial area surrounded by the broken lines represents an area (hereinafter referred to as "detectable area 68") where other objects can be detected by the millimeter-wave radar 26 alone. In the example shown in FIG. 4, since the other vehicle 64 exists on the path to be traveled by the own vehicle 60 within the detectable area 68, the target setter 17 sets the other vehicle 64 as a target 70.

Although the distance between the position P2 and the position P0 is smaller than the distance between the position P1 and the position P0, it should be noted that since the other vehicle 66 does not exist on the path to be traveled by the own vehicle 60, the other vehicle 66 is not set as the target 70.

It is assumed that, as shown in FIG. 5, the other vehicle 66 cuts into the lane 62C from the lane 62R and enters the path to be traveled by the own vehicle 60. Then, the target setter 17 sets the other vehicle 66, instead of the other vehicle 64, as a new target 70.

[Problems with Conventional Estimating Process]

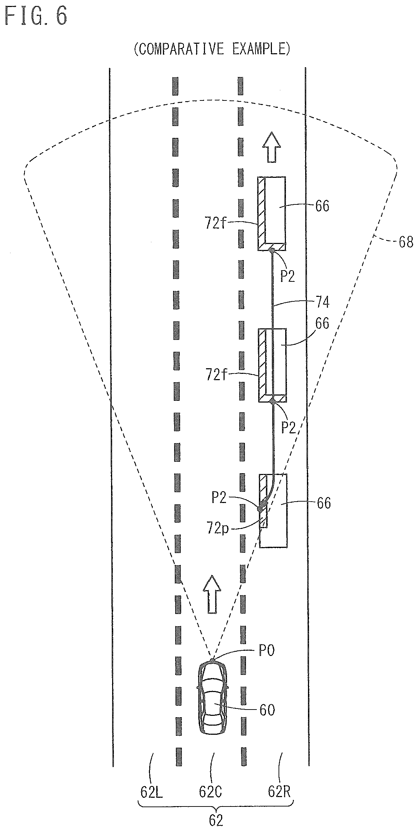

It is assumed that, as shown in FIG. 6, the speed of the own vehicle 60 is higher than the speed of the other vehicle 66. Then, as time elapses, the distance between the own vehicle 60 and the other vehicle 66 is reduced, and consequently the detected position of the other vehicle 66 gradually approaches a near side of the detectable area 68. The other vehicle 66 has detection surfaces 72f, 72p each serving as a surface that reflects the electromagnetic wave from the millimeter-wave radar 26.

The detectable area 68 is wider in a longer-distance side thereof and narrower in a shorter-distance side thereof. For example, when the other vehicle 66 is spaced from the own vehicle 60, the detection surface 72f includes all of a left side surface and a rear surface of the other vehicle 66. When the other vehicle 66 is close to the own vehicle 60, however, the detection surface 72p includes only part of the left side surface of the other vehicle 66.

Since the ranges (projected areas) of the detection surfaces 72f, 72p vary depending on the positional relationship between the own vehicle 60 and the other vehicle 66, there is a situation where the estimated position P2 (the reference position on the other vehicle 66) may be different. As a result, a path 74 followed by the position P2 is substantially J-shaped, so that the other vehicle 66 is estimated as cutting into the lane 62C from the lane 62R, as with the case shown in FIG. 5. Consequently, although the other vehicle 66 is traveling on the lane 62R that is different from the lane 62C on which the own vehicle 60 is traveling, the target setter 17 may possibly set the other vehicle 66 as a new target 70.

According to the present embodiment, there is proposed a process of estimating the position or motion of another object (the other vehicle 64, 66 in FIG. 4) at any position within the detectable area 68 which extends in a radial pattern without substantially increasing the amount of processing operation and the processing burden.

[Process of Estimating Feature Quantities]

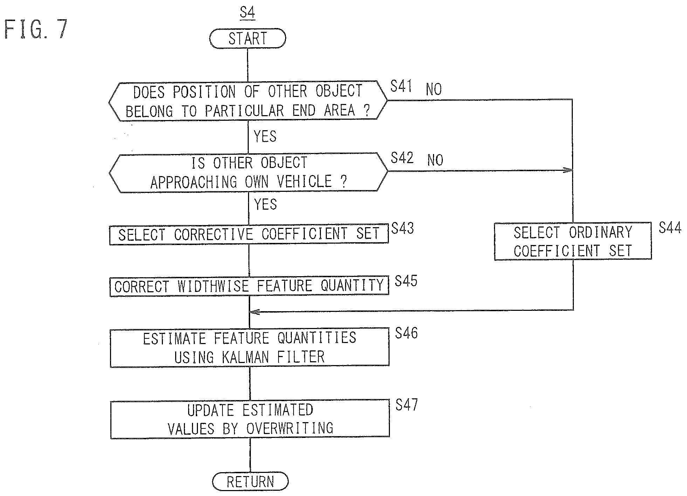

The process of estimating positions or motions of other objects including the other vehicles 64, 66 with respect to the own vehicle 60 (step S4 in FIG. 3) will be described in detail below with reference to FIGS. 7 through 9.

<State Space Model>

Prior to the estimating process, a state space model is constructed which describes the time series of a state vector whose vector components are represented by a plurality of feature quantities with respect to the position or motion of another object. Using a state equation and an observation equation, the state space model is expressed according to the following expressions (1), for example:

$$\begin{cases} s_{t+1} = A \cdot s_t + e_t \\ m_t = H \cdot s_t + d_t \end{cases} \quad \cdots (1)$$

where $\{S_t\}$ and $\{m_t\}$ represent a state vector and an observation vector, respectively, at time t (t is an integer). The state vector $\{S_t\}$ and the observation vector $\{m_t\}$ are given respectively by the following expressions (2), where the subscript t is omitted for illustrative purposes:

$$
s = \begin{pmatrix} x \\ y \\ v_x \\ v_y \\ a_x \\ a_y \end{pmatrix}, \qquad m = \begin{pmatrix} x \\ y \\ v_y \end{pmatrix} \quad \cdots \quad (2)
$$

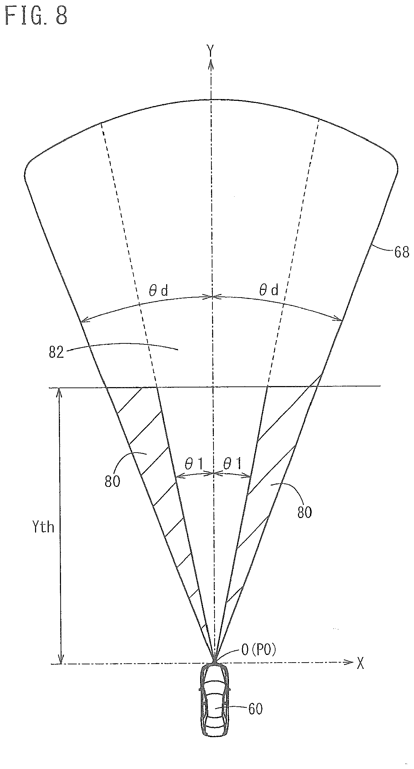

As can be understood from the above expressions, the state vector $\{S_t\}$ comprises, successively from above, the X coordinate of the position, the Y coordinate of the position, the X-axis component of the speed, the Y-axis component of the speed, the X-axis component of the acceleration, and the Y-axis component of the acceleration. The observation vector $\{m_t\}$ comprises the X coordinate of the position, the Y coordinate of the position, and the Y-axis component of the speed. The position P0 of the own vehicle 60 is defined as the "origin O", the widthwise direction of the own vehicle 60 as the "X-axis", and the lengthwise direction of the own vehicle 60 as the "Y-axis" (see FIG. 8).

These vector components include a "widthwise feature quantity" representing a behavior of the other object along the widthwise direction of the own vehicle 60, and a "lengthwise feature quantity" representing a behavior of the other object along the lengthwise direction of the own vehicle 60. In the expressions (2), the widthwise feature quantity corresponds to the X coordinate of the position, the X-axis component of the speed, and the X-axis component of the acceleration, whereas the lengthwise feature quantity corresponds to the Y coordinate of the position, the Y-axis component of the speed, and the Y-axis component of the acceleration.

"A" and "H" in the expressions (1) correspond respectively to a state transition matrix and an observation matrix. The state transition matrix A and the observation matrix H are given respectively by the following expressions (3), where Δt means a time interval corresponding to one step in a discrete system:

$$
A = \begin{pmatrix}
1 & 0 & \Delta t & 0 & \frac{(\Delta t)^2}{2} & 0 \\
0 & 1 & 0 & \Delta t & 0 & \frac{(\Delta t)^2}{2} \\
0 & 0 & 1 & 0 & \Delta t & 0 \\
0 & 0 & 0 & 1 & 0 & \Delta t \\
0 & 0 & 0 & 0 & 1 & 0 \\
0 & 0 & 0 & 0 & 0 & 1
\end{pmatrix}, \qquad
H = \begin{pmatrix}
1 & 0 & 0 & 0 & 0 & 0 \\
0 & 1 & 0 & 0 & 0 & 0 \\
0 & 0 & 0 & 1 & 0 & 0
\end{pmatrix}
$$

$$\cdots (3)$$

In the expressions (1), $\{e_t\}$ and $\{d_t\}$ represent a state noise $\{e_t\}$ and an observation noise $\{d_t\}$, respectively, at time t (t is an integer). The covariance matrix Q of the state noise $\{e_t\}$ and the covariance matrix R of the observation noise $\{d_t\}$ are given respectively by the following expressions (4), where a variable parameter Nc1 is an arbitrary positive number representing the noise covariance of the observation equation at the X coordinate of the position:

$$
Q = \begin{pmatrix}
0.01 & 0 & 0 & 0 & 0 & 0 \\
0 & 0.01 & 0 & 0 & 0 & 0 \\
0 & 0 & 0.05 & 0 & 0 & 0 \\
0 & 0 & 0 & 0.05 & 0 & 0 \\
0 & 0 & 0 & 0 & 0.01 & 0 \\
0 & 0 & 0 & 0 & 0 & 0.01
\end{pmatrix}, \qquad
R = \begin{pmatrix}
Nc1 & 0 & 0 \\
0 & 0.1 & 0 \\
0 & 0 & 0.9
\end{pmatrix}, \quad Nc1 > 0
$$

$$\cdots (4)$$

The cluster of the matrix elements of A, H represented by the expressions (3) and the matrix elements of Q, R represented by the expressions (4) may be referred to as a "set of estimation coefficients" or simply as a "coefficient set".

As described above, the feature quantity estimator 22 sequentially estimates, with a Kalman filter, a plurality of feature quantities (state vectors) expressed by the expressions (2), using the set of estimation coefficients expressed by the expressions (3) and (4), according to the stated space model expressed by the expressions (1).

<Estimation Flow>

In step S41 shown in FIG. 7, the feature quantity estimator 22 judges whether the position of another object detected in step S3 belongs to a particular end area 80 or not.

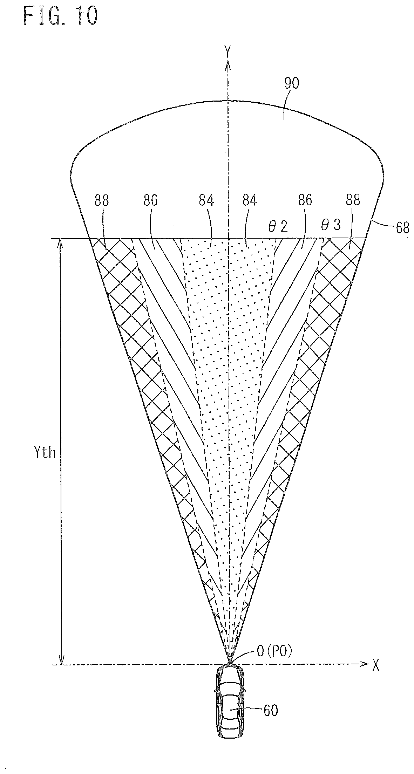

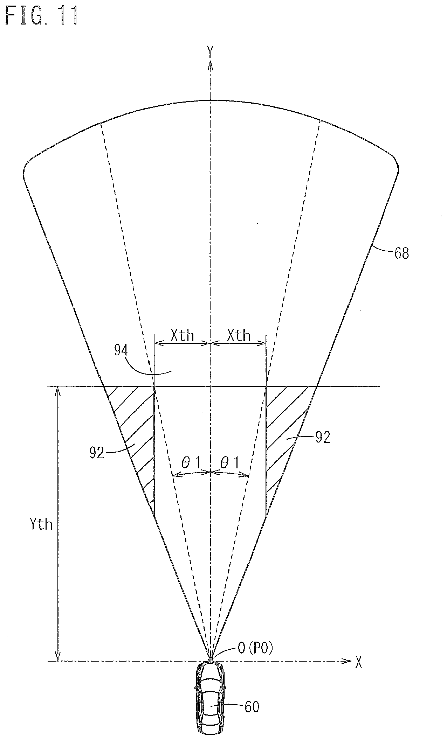

FIG. 8 is a first schematic view showing the division of subareas in the detectable area 68. As described above, the position P0 of the own vehicle 60 is defined as the "origin O", the widthwise direction of the own vehicle 60 as the "X-axis", and the lengthwise direction of the own vehicle 60 as the "Y-axis". The same definitions apply also to FIGS. 10 and 11 to be described later.

The detectable area 68 has a sectorial shape whose central point is located at the position P0 and whose central angle is represented by $2.\theta d$ (unit: rad). The detectable area 68 comprises subareas of two kinds, or specifically, particular end areas 80 existing respectively at both ends of the near side of the detectable area 68 and an ordinary area 82 which is the remaining area thereof.

The particular end areas 80 represent a cluster of positions (x, y) that satisfy both $\theta1 \leq |\theta| \leq \theta d$ and $0 \leq y \leq Yth$ where $\theta = \tan^{-1}(x/y)$, and $\theta1$ and $Yth$ represent threshold values that are arbitrary positive values.

If the position of the other object is judged as belonging to the particular end area 80 (step S41: YES), then control goes to next step S42. If the position of the other object is judged as belonging to the ordinary area 82, i.e., if the position of the other object is judged as not belonging to the particular end area 80 (step S41: NO), then control goes to step S44 to be described later.

In step S42, the feature quantity estimator 22 judges whether the other object is approaching the own vehicle 60 or not. For example, the feature quantity estimator 22 may read the most recent estimated value that has been most recently obtained, from the estimated value storage 24, refer to the read estimated value, and judge that the other object is approaching the own vehicle 60 if the speed vector of the other object is oriented toward the origin O (the position P0).

If the other object is judged as approaching the own vehicle 60 (step S42: YES), then control goes to next step S43. If the other object is judged as not approaching the own vehicle 60 (step S42: NO), then control goes to step S44 to be described later.

In step S43, the feature quantity estimator 22 selects a set of corrective estimation coefficients (hereinafter referred to as "corrective coefficient set"), after which control goes to step S45. In step S44, the feature quantity estimator 22 selects a set of ordinary estimation coefficients (hereinafter referred to as "ordinary coefficient set"), after which control goes to step S46.

As can be understood from the expressions (3) and (4), the corrective coefficient set has estimation coefficients whose values are the same as the ordinary coefficient set, except for the value of the variable parameter $Nc1$. For example, the variable parameter $Nc1$ is set to $Nc1 = U1$ (e.g., 1.5) for the ordinary coefficient set, whereas the variable parameter $Nc1$ is set to $Nc1 = U2$ (e.g., 10000) for the corrective coefficient set.

In other words, the feature quantity estimator 22 may use a "corrective coefficient set" whose inheritance possibility to inherit the estimated result of the widthwise feature quantity (the X coordinate of the position in this case) is higher at an end in one direction (the particular end area 80) than at the center in an angular direction (the ordinary area 82). The "inheritance possibility" means the degree of certainty with which the estimated result in the past (including the most recent estimated result) is maintained when a sequential estimating process is carried out. The "one direction" means a widthwise direction (X) or an angular direction ($\theta$), and corresponds to the angular direction ($\theta$) in the present embodiment.

With the above arrangement, since the past estimated result is reflected more strongly at the end in the angular direction, an erroneous estimated result of the widthwise feature quantity is prevented from being obtained even when part of the other object exists outside the detectable area 68.

The feature quantity estimator 22 may alternatively use a "corrective coefficient set" including a noise covariance ($Nc1 = V2$) with respect to the widthwise feature quantity, which is of a greater value at the end in one direction than at the center in the one direction ($Nc1 = V1$). It is possible to minimize the number of variable parameters by using the tendency that the past estimated result is reflected more strongly if the value of the variable parameter ($Ncl$) is increased.

The feature quantity estimator 22 may use a "corrective coefficient set" whose inheritance possibility to inherit the estimated result is higher with respect to another object that exists in the end in one direction (the particular end area 80) and is approaching the own vehicle 60. In view of the fact that the other object that is approaching the own vehicle 60 has a higher attention level for the own vehicle 60, an erroneous estimated result of the widthwise feature quantity of the other object whose attention level is higher is prevented from being obtained.

The feature quantity estimator 22 may use a "corrective coefficient set" whose inheritance possibility to inherit the estimated result is higher with respect to another object (e.g., the other vehicle 66) that exists in the end in one direction (the particular end area 80) and is greater than a predetermined size. In view of the fact that the other object that has a greater size exists across and over the boundary of the detectable area 68 for a longer time, an erroneous estimated result of the widthwise feature quantity of the other object which is greater than a predetermined size is prevented from being obtained.

In step S45, the feature quantity estimator 22 corrects the widthwise feature quantity (e.g., the X-axis component of the speed) among the most recent estimated feature quantities to weaken the effect on the present estimated result. Consequently, even if the most recent estimated result is erroneous, an erroneous estimated result is prevented from being obtained by the present estimating process.

In step S46, the feature quantity estimator 22 estimates a plurality of feature quantities according to a known estimating process, using the "set of estimation coefficients" selected in step S43 or S44. Specifically, the feature quantity estimator 22 sequentially estimates a state vector $\{S_t\}$ with a Kalman filter according to the state space model expressions (1) that describe the time series of the state vector $\{S_t\}$. It should be noted that it is possible to substantially reduce the amount of processing operation and the processing burden while maintaining the estimation accuracy, by using the Kalman filter.

Predicted values $\{s_{t|t-1}\}$, $\{\Sigma_{t|t-1}\}$ of the state vector $\{S_t\}$ and the covariance matrix $\{\Sigma_t\}$ at present time (t) are expressed by the following expressions (5):

$$\begin{cases} s_{t|t-1} = A \cdot s_{t-1|t-1} \\ \Sigma_{t|t-1} = A \cdot \Sigma_{t-1|t-1} \cdot A^T + Q \end{cases} \quad \cdots \ (5)$$

where the suffix (t-1|t-1) represents an estimated value at most recent time (t-1), and the suffix (t|t-1) represents a predicted value at present time (t) based on the estimated value at most recent time (t-1).

In this case, a Kalman gain K is given by the following expression (6):

$$K = \Sigma_{t|t-1} \cdot H^T \cdot \left( H \cdot \Sigma_{t|t-1} \cdot H^T + R \right)^{-1} \cdots \ (6)$$

Estimated values $\{s_{t|t}\}$, $\{\Sigma_{t|t}\}$ at present time (t) are given by the following expressions (7):

$$\begin{cases} s_{t|t} = s_{t|t-1} + K \cdot \left( m_t - H \cdot s_{t|t-1} \right) \\ \Sigma_{t|t} = \left( I - K \cdot H \right) \cdot \Sigma_{t|t-1} \end{cases} \quad \cdots \ (7)$$

In step S47, the estimated value storage 24 updates the estimated values to new ones obtained in step S46 by overwriting. The estimates values at present time (t) will be used in an estimating process at next time (t+1).

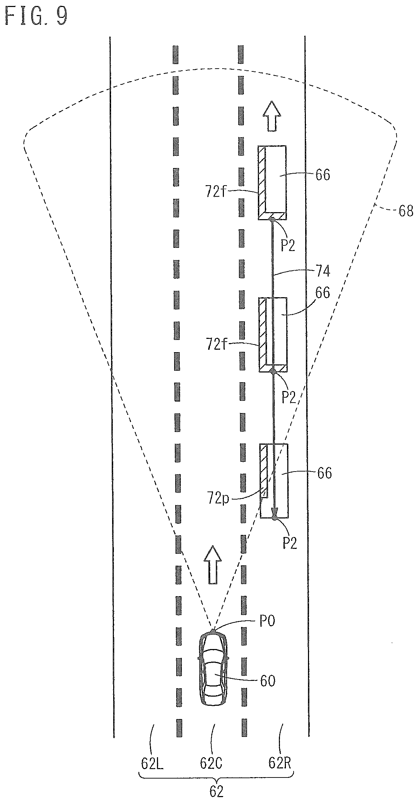

As shown in FIG. 9, the estimated result of the position P2 (the reference position on the other vehicle 66) remains essentially the same despite the fact that the ranges (projected areas) of the detection surfaces 72f, 72p vary depending on the positional relationship between the own vehicle 60 and the other vehicle 66. As a consequence, the path 74 followed by the position P2 is generally I-shaped, so that the target setter 17 will not erroneously set the other vehicle 66 traveling on the lane 62R different from the lane of the own vehicle 60, as a target 70.

[Other Examples of Estimation Coefficient Set]

The "set of estimation coefficients" used in the estimating process is not limited to the example according to the expressions (3) and (4), but may take various values or definitions.

For example, a covariance matrix Q and a covariance matrix R that are different from those according to the expressions (4) are given by the expressions (8) below. A variable parameter Nc2 is an arbitrary positive number representing the noise covariance of the state equation at the X coordinate of the position. For example, the variable parameter Nc2 is set to Nc2 = V1 (e.g., 0.01) for the ordinary coefficient set, whereas the variable parameter Nc2 is set to Nc2 = V2 (e.g., 0.0001) for the corrective coefficient set.

$$Q = \begin{pmatrix} Nc2 & 0 & 0 & 0 & 0 & 0 \\ 0 & 0.01 & 0 & 0 & 0 & 0 \\ 0 & 0 & 0.05 & 0 & 0 & 0 \\ 0 & 0 & 0 & 0.05 & 0 & 0 \\ 0 & 0 & 0 & 0 & 0.01 & 0 \\ 0 & 0 & 0 & 0 & 0 & 0.01 \end{pmatrix}, \quad R = \begin{pmatrix} 1.5 & 0 & 0 \\ 0 & 0.1 & 0 \\ 0 & 0 & 0.9 \end{pmatrix}, \quad Nc2 > 0$$

$$\cdots (8)$$

As described above, the feature quantity estimator 22 may use a "corrective coefficient set" including a noise covariance (Nc2 = V2) with respect to the widthwise feature quantity, which is of a smaller value at the end in one direction than at the center in the one direction (Nc2 = V1). It is possible to minimize the number of variable parameters by using the tendency that the past estimated result is reflected more strongly if the value of the variable parameter (Nc2) is reduced.

[Other Examples of Dividing Manner]

The dividing manner of dividing into the particular end areas 80 is not limited to the example shown in FIG. 8, but may employ various forms (shapes and sizes).

<First Example>

FIG. 10 is a second schematic view showing the division of subareas in the detectable area 68. The detectable area 68 which is of a sectorial shape comprises subareas of four kinds, or specifically, first areas 84, second areas 86, third areas 88, which are arranged from the inside toward the outside, and an ordinary area 90 as the remaining area thereof.

The first areas 84 represent a cluster of positions (x, y) that satisfy both $0 \leq |\theta| \leq \theta2$ and $0 \leq y \leq Yth$. The second areas 86 represent a cluster of positions (x, y) that satisfy both $\theta2 \leq |\theta| \leq \theta3$ and $0 \leq y \leq Yth$. The third areas 88 represent a cluster of positions (x, y) that satisfy both $\theta3 \leq |\theta| \leq \theta d$ and $0 \leq y \leq Yth$. The ordinary area 90 represents a cluster of positions (x, y) that satisfy both $0 \leq |\theta| \leq \theta d$ and $y > Yth$. $\theta2$ and 83 represent threshold values that are arbitrary positive values.

For example, if the position of another object belongs to the first areas 84, then the variable parameter Nc1 is set to Nc1 = W1. If the position of another object belongs to the second areas 86, then the variable parameter Nc1 is set to Nc1 = W2. If the position of another object belongs to the third areas 88, then the variable parameter Nc1 is set to Nc1 = W3. If the position of another object belongs to the ordinary area 90, then the variable parameter Nc1 is set to Nc1 = W0. These values satisfy the relationship: 0 < W0 < W1 < W2 < W3. In this manner, the inheritance possibility to inherit the estimated result may be increased stepwise from the center to the ends of the detectable area 68.

<Second Example>

FIG. 11 is a third schematic view showing the division of subareas in the detectable area 68. The detectable area 68 which is of a sectorial shape comprises subareas of two kinds, or specifically, particular end areas 92 existing respectively at both ends of the near side of the detectable area 68 and an ordinary area 94 which is the remaining area thereof.

The particular end areas 92 represent a cluster of positions (x, y) that satisfy $|x| \geq Xth$ as well as $\theta1 \leq |\theta| \leq \theta d$ and $0 \leq y \leq Yth$ where Xth represents a threshold value that is an arbitrary positive value. In this manner, for dividing into the particular end areas 92, not only the angular direction ($\theta$), but also a restrictive condition for positions on a two-dimensional coordinate system may be added. Alternatively, only a restrictive condition for positions on a one-dimensional coordinate system or a two-dimensional coordinate system may be added instead of the restrictive condition for positions in the angular direction.

<Third Example>

In the example shown in FIG. 8, the detectable area 68 is of a shape which extends radially from the position P0 on the own vehicle 60. However, the detectable area 68 may be of an arbitrary shape whose size is finite. In this case, the feature quantity estimator 22 is able to estimate a plurality of feature quantities using a different set of estimation coefficients depending on the position of the other vehicle in at least one of the widthwise direction (X) of the own vehicle 60 and the angular direction ($\theta$) about the own vehicle 60 within the detectable area 68.

[Advantages of Motion Assisting Apparatus 10]

As described above, the motion assisting apparatus 10 is provided with the millimeter-wave radar 26 mounted on the own vehicle 60 and for acquiring a detection signal representing another vehicle 64, 66 that exists in the detectable area 68, and the feature quantity estimator 22 for estimating a plurality of feature quantities with respect to a relative position or motion of the other vehicle 64, 66 with respect to the own vehicle 60 by use of the acquired detection signal and a set of estimation coefficients. The feature quantity estimator 22 estimates a plurality of feature quantities using a different set of estimation coefficients depending on the position of the other vehicle 64, 66 in at least one of the widthwise direction (X) of the own vehicle 60 and the angular direction ($\theta$) about the own vehicle 60 within the detectable area 68.

Since the motion assisting apparatus 10 includes the feature quantity estimator 22 which estimates a plurality of feature quantities using a different set of estimation coefficients depending on the position in at least one of the widthwise direction (X) and the angular direction ($\theta$) within the detectable area 68, it is possible to carry out an estimating process suitable for the position in the widthwise direction (X) or the angular direction ($\theta$) simply by changing the set of estimation coefficients. Therefore, it is possible to estimate the position or motion of the other vehicle 64, 66 at any position within the detectable area 68 whose size is finite, without substantially increasing the amount of processing operation and the processing burden.

[Comments]

According to the present embodiment, the variable parameters (Nc1, Nc2) included in the set of estimation coefficients are provided as one each. However, they may be provided as two or more each. The values of the variable parameters may be changed depending on the various sensor signals (indicating the steering angle, yaw rate, speed, and present position, for example, of the own vehicle 60) from the sensor group 28.

According to the present embodiment, the millimeter-wave radar 26 is used as a detecting means. However, the detecting means may comprise a laser sensor for sending and receiving a laser beam (one form of electromagnetic wave). Alternatively, the detecting means may comprise an ultrasonic sensor (sonar) for sending and receiving an ultrasonic wave, instead of an electromagnetic wave.

According to the present embodiment, the motion assisting apparatus 10 is applied to a four-wheel vehicle (a vehicle in a narrow sense). However, the motion assisting apparatus 10 is applicable to a mobile body which may be an object or a biological body (including a human being). Mobile bodies as objects are vehicles in a wide sense including two-wheel vehicles, ships, aircrafts, artificial satellites, or the like. If a mobile body is a human being, then the motion assisting apparatus 10 may be in the form of a wearable device specifically including glasses, a wrist watch, and a hat.

**Claims**

1. An object recognition apparatus (10) comprising:

   detecting means (26) mounted on a mobile body (60) and for acquiring a detection signal representing an object (64, 66) that exists within a detectable area (68); and
   feature quantity estimating means (22) for estimating a plurality of feature quantities with respect to a relative position or motion of the object (64, 66) with respect to the mobile body (60), using the detection signal acquired by the detecting means (26) and a set of estimation coefficients,
   wherein the detectable area (68) has a sectional shape whose central point is located at a position (P0) of the mobile body (60) and whose central angle (2$\theta$d) falls within a predetermined range, and the detectable area (68) is formed of particular end areas (80, 88, 92) existing respectively at both ends of a near part of the sectional shape and an ordinary area (82, 84, 86, 90, 94) which is a remaining area of the sectional shape,
   wherein the plurality of feature quantities include a widthwise feature quantity representing a behavior of the object (64, 66) along a widthwise direction (X); and
   wherein the feature quantity estimating means (22) estimates the plurality of feature quantities using the set of estimation coefficients whose inheritance possibility to inherit an estimated result of the widthwise feature quantity is higher at the particular end areas (80, 88, 92) than at the ordinary area (82, 84, 94) in at least one of the widthwise direction (X) of the mobile body (60) and an angular direction ($\theta$), depending on a position of the object (64, 66) approaching the particular end areas (80, 88, 92), and
   wherein the feature quantity estimating means (22) sequentially estimates the plurality of feature quantities with a Kalman filter according to a state space model that describes a time series of a state vector whose vector components are represented by the plurality of feature quantities.

**2.** The object recognition apparatus (10) according to claim 1, wherein the set of estimation coefficients includes a noise covariance of a state equation which specifies the state space model; and
the feature quantity estimating means (22) estimates the plurality of feature quantities using the set of estimation coefficients including the noise covariance with respect to the widthwise feature quantity, the noise covariance being of a smaller value at the end (80, 88, 92) in the widthwise direction (X) or the angular direction ($\theta$) than at the center (82, 84, 94) in the widthwise direction (X) or the angular direction ($\theta$).

**3.** The object recognition apparatus (10) according to claim 1 or 2, wherein the feature quantity estimating means (22) estimates the plurality of feature quantities using the set of estimation coefficients whose inheritance possibility to inherit the estimated result is higher with respect to the object (64, 66) that exists at the end (80, 88, 92) in the widthwise direction (X) or the angular direction ($\theta$) and that is approaching the mobile body (60).

**4.** The object recognition apparatus (10) according to any one of claims 1 through 3, wherein the feature quantity estimating means (22) estimates the plurality of feature quantities using the set of estimation coefficients whose inheritance possibility to inherit the estimated result is higher with respect to the object (64, 66) that exists at the end (80, 88, 92) in the widthwise direction (X) or the angular direction ($\theta$) and that is greater than a predetermined size.

**5.** The object recognition apparatus (10) according to any one of claims 1 through 4, wherein the detecting means (26) acquires the detection signal representing the object (64, 66) that exists within the detectable area (68) which extends radially from a position (P0) of the mobile body (60); and
the feature quantity estimating means (22) estimates the plurality of feature quantities using the different set of estimation coefficients depending on the position of the object (64, 66) in the angular direction ($\theta$) within the detectable area (68).

**Patentansprüche**

**1.** Objekterkennungsvorrichtung (10), welche aufweist:

ein Detektionsmittel (26), das an einem mobilen Körper (60) angebracht ist und zum Erfassen eines Detektionssignals dient, das ein Objekt (64, 66) repräsentiert, welches innerhalb eines detektierbaren Bereichs (68) existiert; und
ein Merkmalsgrößenschätzmittel (22) zum Schätzen einer Mehrzahl von Merkmalsgrößen in Bezug auf eine relative Position oder Bewegung des Objekts (64, 66) in Bezug auf den mobilen Körper (60) unter Verwendung des von dem Detektionsmittel (26) erfassten Detektionssignals und eines Satzes von Schätzkoeffizienten,
wobei der detektierbare Bereich (68) eine Schnittform hat, deren Mittelpunkt an einer Position (P0) des mobilen Körpers (60) angeordnet ist und dessen Mittenwinkel ($2\theta d$) in einen vorbestimmten Bereich fällt, und der detektierbare Bereich (68) aus besonderen Endbereichen (80, 88, 92), die jeweils an beiden Enden eines nahen Teils der Schnittform existieren, und einem normalen Bereich (82, 84, 86, 90, 94), der ein restlicher Bereich der Schnittform ist, gebildet ist,
wobei die Mehrzahl von Merkmalsgrößen eine Breiten-Merkmalsgröße enthalten, die ein Verhalten des Objekts (64, 66) entlang einer Breitenrichtung (X) repräsentiert; und
wobei das Merkmalsgrößenschätzmittel (22) die Mehrzahl von Merkmalsgrößen unter Verwendung des Satzes von Schätzkoeffizienten schätzt, deren Vererbungsmöglichkeit, um ein geschätztes Ergebnis der Breiten-Merkmalsgröße zu erben, in zumindest einer der Breitenrichtung (X) des beweglichen Körpers (60) und einer Winkelrichtung ($\theta$), in Abhängigkeit von einer Position des Objekts (64, 66), das sich den besonderen Endbereichen (80, 88, 92) annähert, an den besonderen Endbereichen (80, 88, 92) höher ist als an dem normalen Bereich (82, 84, 94) und
wobei das Merkmalsgrößenschätzmittel (22) die Mehrzahl von Merkmalsgrößen mit einem Kalman-Filter gemäß einem Zustandsraummodell sequenziell schätzt, das eine Zeitserie eines Zustandsvektors beschreibt, dessen Vektorkomponenten durch die Mehrzahl von Merkmalsgrößen repräsentiert sind.

**2.** Die Objekterkennungsvorrichtung (10) nach Anspruch 1, wobei der Satz von Schätzkoeffizienten eine Rauschkovarianz einer Zustandsgleichung enthält, die das Zustandsraummodell spezifiziert; und
das Merkmalsgrößenschätzmittel (22) die Mehrzahl von Merkmalsgrößen unter Verwendung des Satzes von Schätzkoeffizienten einschließlich der Rauschkovarianz in Bezug auf die Breiten-Merkmalsgröße schätzt, wobei die Rauschkovarianz am Ende (88, 88, 92) in der Breitenrichtung (X) oder der Winkelrichtung ($\theta$) einen kleineren Wert hat als an der Mitte (82, 84, 94) in der Breitenrichtung (X) oder der Winkelrichtung ($\theta$).

3. Die Objekterkennungsvorrichtung (10) nach Anspruch 1 oder 2, wobei das Merkmalsgrößenschätzmittel (22) die Mehrzahl von Merkmalsgrößen unter Verwendung des Satzes von Schätzkoeffizienten schätzt, deren Erbmöglichkeit zum Erben des geschätzten Ergebnisses in Bezug auf das Objekt (64, 66), das an dem Ende (80, 88, 92) in der Breitenrichtung (X) oder der Winkelrichtung (θ) existiert und das sich dem beweglichen Körper (60) annähert, höher ist.

4. Die Objekterkennungsvorrichtung (10) nach einem der Ansprüche 1 bis 3, wobei das Merkmalsgrößenschätzmittel (22) die Mehrzahl von Merkmalsgrößen unter Verwendung des Satzes von Schätzkoeffizienten schätzt, deren Erbmöglichkeit zum Erben des geschätzten Ergebnisses in Bezug auf das Objekt (64, 66), das an dem Ende (80, 88, 92) in der Breitenrichtung (X) oder der Winkelrichtung (θ) existiert und das größer als eine vorbestimmte Größe ist, höher ist.

5. Die Objekterkennungsvorrichtung (10) nach einem der Ansprüche 1 bis 4, wobei das Detektionsmittel (26) das Detektionssignal erfasst, das das Objekt (64, 66) repräsentiert, das innerhalb des detektierbaren Bereichs (68) existiert, der sich radial von einer Position (P0) des beweglichen Körpers (60) erstreckt; und das Merkmalsgrößenschätzmittel (22) die Mehrzahl von Merkmalsgrößen unter Verwendung des unterschiedlichen Satzes von Schätzkoeffizienten in Abhängigkeit von der Position (64, 66) in der Winkelrichtung (θ) innerhalb des detektierbaren Bereichs (68) schätzt.

## Revendications

1. Appareil de reconnaissance d'objet (10) comprenant :

   des moyens de détection (26) montés sur un corps mobile (60) et pour acquérir un signal de détection représentant un objet (64, 66) qui existe dans une zone détectable (68) ; et
   des moyens d'estimation de quantité de caractéristique (22) pour estimer une pluralité de quantités de caractéristique par rapport à une position relative ou un mouvement de l'objet (64, 66) par rapport au corps mobile (60), en utilisant le signal de détection acquis par les moyens de détection (26) et un ensemble de coefficients d'estimation,
   dans lequel la zone détectable (68) a une forme en coupe dont le point central est situé à une position (P0) du corps mobile (60) et dont l'angle central (2θd) tombe dans une plage prédéterminée, et la zone détectable (68) est constituée de zones d'extrémité particulières (80, 88, 92) existant respectivement aux deux extrémités d'une partie proche de la forme en coupe et d'une zone ordinaire (82, 84, 86, 90, 94) qui est une zone restante de la forme en coupe,
   dans lequel la pluralité de quantités de caractéristique comprend une quantité de caractéristique dans le sens de la largeur représentant un comportement de l'objet (64, 66) le long d'une direction dans le sens de la largeur (X) ; et
   dans lequel les moyens d'estimation de quantité de caractéristique (22) estiment la pluralité de quantités de caractéristique en utilisant l'ensemble de coefficients d'estimation dont la possibilité d'héritage pour hériter d'un résultat estimé de la quantité de caractéristique dans le sens de la largeur est plus élevée au niveau des zones d'extrémité particulières (80, 88, 92) qu'au niveau de la zone ordinaire (82, 84, 94) dans au moins l'une de la direction dans le sens de la largeur (X) du corps mobile (60) et d'une direction angulaire (θ), en fonction d'une position de l'objet (64, 66) s'approchant des zones d'extrémité particulières (80, 88, 92), et
   dans lequel les moyens d'estimation de quantité de caractéristique (22) estiment séquentiellement la pluralité de quantités de caractéristique avec un filtre de Kalman conformément à un modèle d'espace d'états qui décrit une série temporelle d'un vecteur d'état dont les composantes vectorielles sont représentées par la pluralité de quantités de caractéristique.

2. Appareil de reconnaissance d'objet (10) selon la revendication 1, dans lequel l'ensemble de coefficients d'estimation comprend une covariance de bruit d'une équation d'état qui spécifie le modèle d'espace d'états ; et les moyens d'estimation de quantité de caractéristique (22) estiment la pluralité de quantités de caractéristique en utilisant l'ensemble de coefficients d'estimation comprenant la covariance de bruit par rapport à la quantité de caractéristique dans le sens de la largeur, la covariance de bruit ayant une plus petite valeur à l'extrémité (80, 88, 92) dans la direction de largeur (X) ou dans la direction angulaire (θ) qu'au centre (82, 84, 94) dans la direction de largeur (X) ou dans la direction angulaire (θ).

3. Appareil de reconnaissance d'objet (10) selon la revendication 1 ou 2, dans lequel les moyens d'estimation de quantité de caractéristique (22) estiment la pluralité de quantités de caractéristique en utilisant l'ensemble de coefficients d'estimation dont la possibilité d'héritage pour hériter du résultat estimé est plus élevée par rapport à l'objet (64, 66) qui existe à l'extrémité (80, 88, 92) dans la direction de largeur (X) ou dans la direction angulaire (θ) et qui s'approche du corps mobile (60).

4.  Appareil de reconnaissance d'objet (10) selon l'une quelconque des revendications 1 à 3, dans lequel les moyens d'estimation de quantité de caractéristique (22) estiment la pluralité de quantités de caractéristique en utilisant l'ensemble de coefficients d'estimation dont la possibilité d'héritage pour hériter du résultat estimé est plus élevée par rapport à l'objet (64, 66) qui existe à l'extrémité (80, 88, 92) dans la direction de largeur (X) ou dans la direction angulaire (θ) et qui est plus grand qu'une taille prédéterminée.

5.  Appareil de reconnaissance d'objet (10) selon l'une quelconque des revendications 1 à 4, dans lequel les moyens de détection (26) acquièrent le signal de détection représentant l'objet (64, 66) qui existe dans la zone détectable (68) qui s'étend radialement à partir d'une position (P0) du corps mobile (60) ; et
les moyens d'estimation de quantité de caractéristique (22) estiment la pluralité de quantités de caractéristique en utilisant l'ensemble différent de coefficients d'estimation en fonction de la position de l'objet (64, 66) dans la direction angulaire (θ) dans la zone détectable (68).

EP 2 998 762 B1

FIG. 1

FIG. 2

FIG. 3

```
                    ( START )
                        |
        ┌─────────────────────────────────┐
        │    ACQUIRE DETECTION SIGNAL      │ S1
        └─────────────────────────────────┘
                        |
        ┌─────────────────────────────────┐
        │      DETECT OTHER OBJECTS        │ S2
        └─────────────────────────────────┘
                        |
  NO    ⟨   CANDIDATES FOR TARGETS ?   ⟩ S3
  |                     |
  |                    YES
  |     ┌─────────────────────────────────┐
  |     │       ESTIMATE POSITIONS         │ S4
  |     │          OR MOTIONS              │
  |     └─────────────────────────────────┘
  |                     |
  |     ┌─────────────────────────────────┐
  |     │  ESTIMATE PATH OF OWN VEHICLE    │ S5
  |     └─────────────────────────────────┘
  |                     |
  |     ┌─────────────────────────────────┐
  |     │          SET TARGET              │ S6
  |     └─────────────────────────────────┘
  |                     |
  |           ⟨     IS ASSISTING      ⟩ S7   NO
  |           ⟨ OPERATION NECESSARY ? ⟩        |
  |                     |                      |
  |                    YES                     |
  |     ┌─────────────────────────────────┐    |
  |     │  PERFORM ASSISTING OPERATION    │ S8  |
  |     └─────────────────────────────────┘    |
  |                     |                      |
  └─────────────────────×──────────────────────┘
                        |
                    ( END )
```

17

FIG. 4

FIG. 5

FIG. 6

(COMPARATIVE EXAMPLE)

FIG. 7

S4

START

S41 DOES POSITION OF OTHER OBJECT BELONG TO PARTICULAR END AREA ?  →NO

YES

S42 IS OTHER OBJECT APPROACHING OWN VEHICLE ?  →NO

YES

S43 SELECT CORRECTIVE COEFFICIENT SET

S44 SELECT ORDINARY COEFFICIENT SET

S45 CORRECT WIDTHWISE FEATURE QUANTITY

S46 ESTIMATE FEATURE QUANTITIES USING KALMAN FILTER

S47 UPDATE ESTIMATED VALUES BY OVERWRITING

RETURN

FIG. 8

FIG. 9

FIG. 10

FIG. 11

**EP 2 998 762 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002122669 A
- WO 2014136754 A1
- CA 2682438 A1